# EUROPÄISCHE PATENTANMELDUNG

(11) **EP 0 924 540 A1**
(43) Veröffentlichungstag der Anmeldung: **23.06.1999**
(21) Anmeldenummer: 98114285.4
(22) Anmeldetag: 30.07.1998
(51) Int. Cl.: G02B 6/42

(54) **Auf Leiterrahmen montiertes elektrooptisches Modul**

(30) Priorität: 16.12.1997 DE 19755806
(71) Anmelder: ROBERT BOSCH GMBH, 70442 Stuttgart (DE)
(72) Erfinder: Hauer, Heiner, 70734 Fellbach (DE); Kuke, Albrecht, 71549 Auenwald (DE); Moess, Eberhard, 71540 Murrhardt (DE); Hirche, Klaus, 71332 Waiblingen (DE); Fritscher, Raimund, 71576 Burgstetten (DE); Scholz, Werner, 71554 Weissach (DE); Sommerfeldt, Ralph, 71522 Backnang (DE)

(57) **Zusammenfassung**

Elektrooptisches Modul mit
- einer elektrischen Schnittstelle in Gestalt von Anschlußstiften (711, 722),
- einer Steckeraufnahme (413) für einen optischen Stecker, deren Steckrichtung quer zu den Längsrichtungen der Anschlußstifte verläuft,
- einem elektrooptischen Bauelement (14), das als Wandler dient und optisch mit der Steckeraufnahme (413) gekoppelt ist,
- einem sich quer zur Steckrichtung der Steckeraufnahme (413), aber auch in Richtung der Anschlußstifte (711, 722) erstreckender Leadframe (10), der einstückig mit den Anschlußstiften (711, 722) versehen und mechanisch starr mit einer Stirnplatte (310) verbunden ist, die eine Buchsenaufnahme (313) aufweist, die sich in Steckrichtung erstreckt,
- einer Buchse (413) in der Buchsenaufnahme als Steckeraufnahme, die durch den Leadframe (10) starr gehalten ist und das elektrooptische Bauelement (14) trägt und
- einer Aussparung im Leadframe (10) für die optische Übertragung zwischen dem elektrooptischen Bauelement (14) und der Steckeraufnahme(413).

Dieser konstruktive Aufbau führt zu geringem Fertigungs-, insbesondere Justageaufwand.

## Beschreibung

### Stand der Technik

Die Erfindung geht von der Gattung aus, wie im unabhängigen Anspruch 1 angegeben.

Bekannt (EP 0 448 989 A1) ist eine optoelektronische Anordnung zum Senden (Transmitter-Receptacle) oder Empfangen (Receiver-Receptacle) von Lichtsignalen über Lichtwellenleiter, wobei sich ein Sende- beziehungsweise ein Empfangsmittel in einer Aufnahme (Receptacle) für jeweils einen optischen Stecker befindet, der an einem Ende eines Lichtwellenleiters angebracht ist. Diese Aufnahme ist über Steckstifte, die gleichzeitig der elektrischen und der mechanischen Kontaktierung dienen, auf einer elektrischen Leiterplatte befestigt. In einer erweiterten Form kann die Aufnahme Mittel nicht nur zum Senden sondern auch zum Empfangen enthalten (Transceiver-Receptacle).

### Vorteile der Erfindung

Der Anmeldungsgegenstand mit den Merkmalen des Anspruches 1 hat folgenden Vorteil:
Das Modul läßt sich mit geringem Fertigungsaufwand, insbesondere Justageaufwand und damit besonders kostengünstig herstellen.

Vorteilhafte Weiterbildungen sind in den abhängigen Ansprüchen angegeben, deren Merkmale auch, soweit sinnvoll, miteinander kombiniert werden können.

### Zeichnung

Ein Ausführungsbeispiel der Erfindung ist in der Zeichnung dargestellt und im Folgenden näher erläutert. Dabei sind bei mehreren Figuren jeweils dieselben Bezugszeichen für im wesentlichen gleiche Teile verwendet. Schematisch ist gezeigt in
- Figur 1:: ein mittels Ätztechnik oder Stanzen strukturierter Metallträger (Leadframe),
- Figur 2:: ein Teil eines Leadframebandes mit zwei Einzelnutzen,
- Figur 3:: eine Halteplatte aus isolierendem Material in Aufsicht,
- Figur 4:: dieselbe Halteplqatte mit einem Leadframe nach Figur 3 im Querschnitt,
- Figur 5:: ein Querschnitt durch ein Steckbuchsengehäuse, an dessen Stirnplatte über Nieten der Leadframe und darüber die Halteplatte mit angenietet sind,
- Figur 6:: ein weiteres vorteilhaftes Ausführungsbeispiel eines Leadframes im Mehrfachnutzen,
- Figur 7:: ein Leadframe mit rechtwinklig umgebogenen Seitenteilen, an dessen Mittelteil eine Halteplatte und ein Steckbuchsengehäuse mit einer Sendeeinheit und einer Empfangseinheit angebracht ist,
- Figur 8:: ein Längsschnitt durch ein fertig montiertes Modul,
- Figur 9:: ein Längsschnitt durch ein allseits metallisch umschlossenes Modul.

### Beschreibung des Ausführungsbeispiels

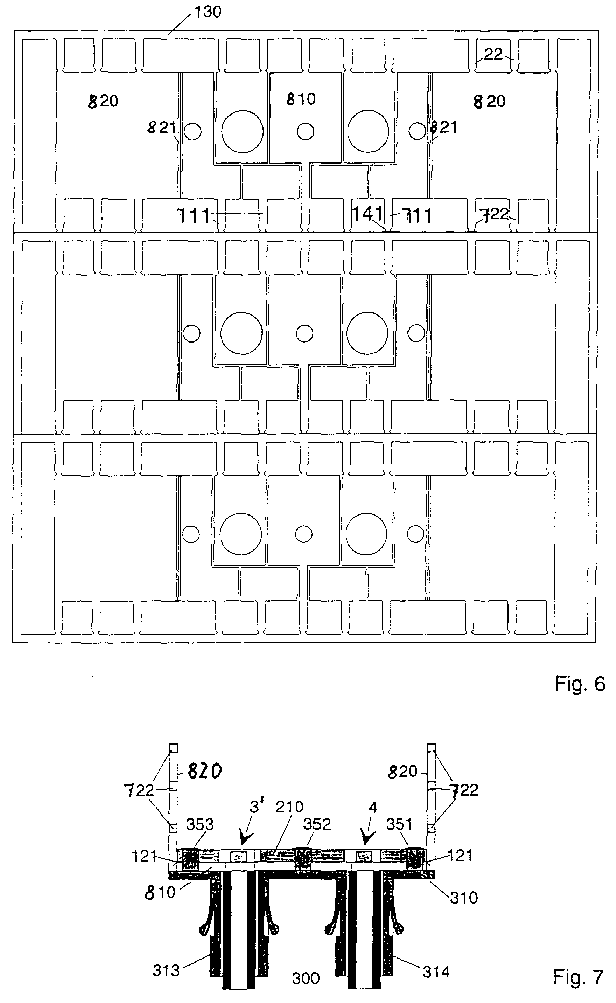

Als Ausführungsbeispiel für ein erfindungsgemäßes Modul ist ein Transceiver-Modul gewählt, bei dem der Sendepfad als Sendeelement eine Halbleiterlaserdiode in einem hermetisch dichten TO-Gehäuse und der Empfangspfad als Empfangselement eine Photodiode als offenes Chipbauelement enthält. Ebenso könnten aber auch beide elektrooptischen Bauelemente in hermetisch dichten TO-Gehäusen oder beide als offene Chips (vergleiche Figur 7) eingesetzt werden.

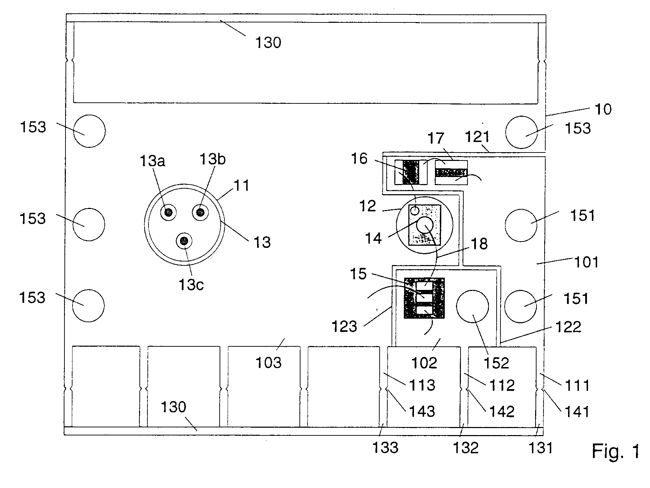

Figur 1 zeigt einen mittels Ätztechnik oder Stanzen strukturierten Metallträger (Leadframe) 10 mit zwei Öffnungen 11 und 12 zur Aufnahme eines Sendeelements 13 mit dessen Anschlußpins 13a, 13b und 13c und eines Empfangselements 14.

Ein Vorteil der Erfindung beim Einsatz von Chip-Bauelementen besteht darin, daß die aktiven und passiven elektronischen Bauelemente für die Treiberschaltung bei Sendeelementen und für die Vorverstärkerschaltung bei Empfangselementen in unmittelbarer Nähe mit auf den Leadframe montiert und mit Bonddrähten kontaktiert werden können. In Figur 1 ist beispielhaft ein Vorverstärker-IC 15, ein Kondensator 16 und ein Chip-Widerstand 17 montiert und mit Bonddrähten 18 kontaktiert. Der Leadframe 10 wird durch geätzte beziehungsweise gestanzte Trennfugen 121, 122, 123 in verschiedene Teilbereiche 101, 102, 103 aufgeteilt, so daß die Teilbereiche mechanisch und elektrisch voneinander isoliert sind. Jeder Teilbereich ist mit mindestens einem Anschlußstift 111, 112, 113 auf einer Randseite des Leadframes mechanisch und elektrisch verbunden, so daß sie während des Verarbeitungsprozesses in ihrer Lage fixiert sind. Die Leadframes werden in Vielfachnutzen hergestellt.

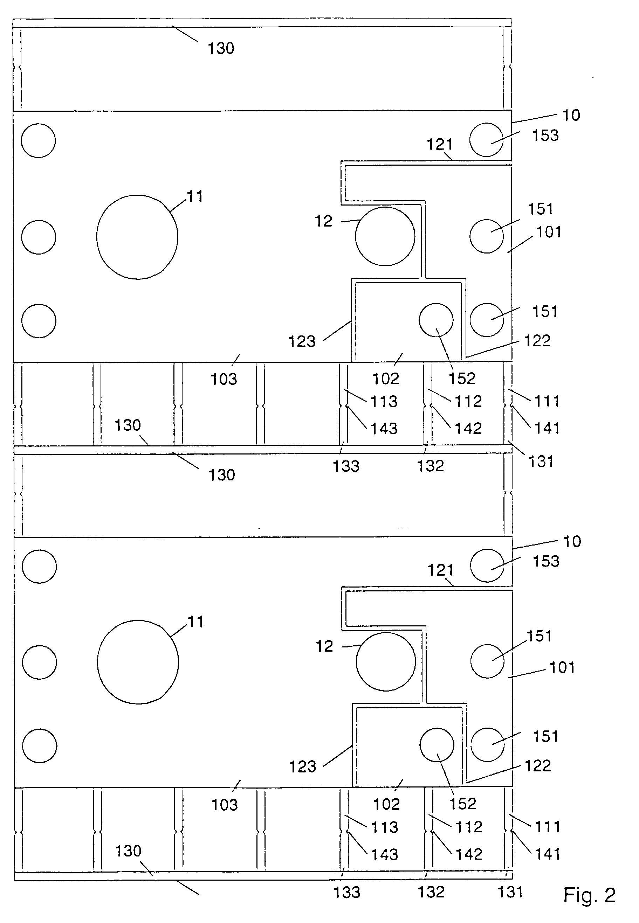

Figur 2 zeigt einen Teil eines Leadframebandes mit zwei Einzelnutzen. Die Einzelnutzen sind, wie nach dem Stand der Technik üblich, über Brücken 130, 131, 132, 133 miteinander verbunden und können an Solltrennstellen 141, 142, 143 separiert werden.

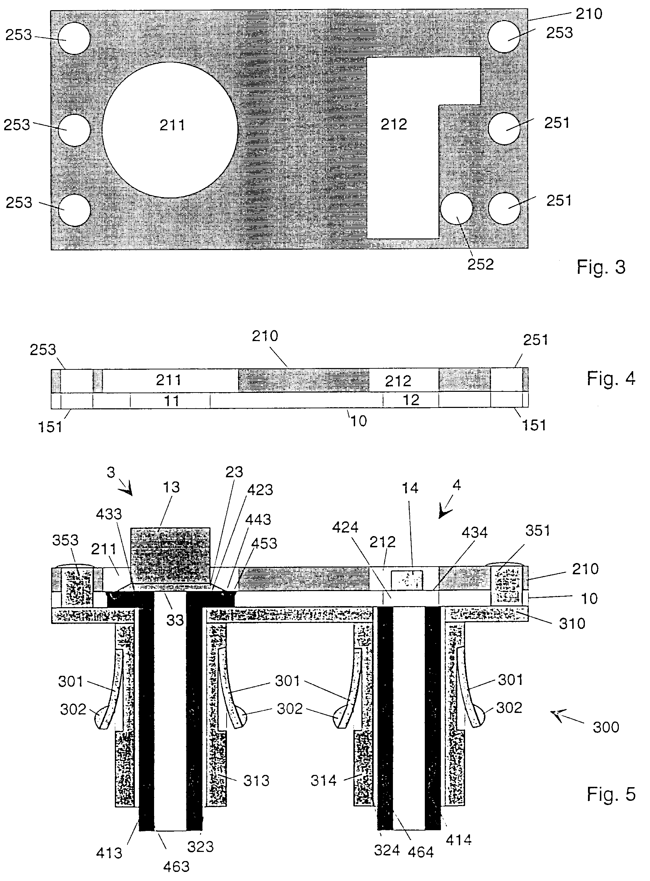

Figur 3 zeigt eine Halteplatte 210, die aus einem isolierenden Material, beispielsweise aus Kunststoff besteht. Eine Aufgabe dieser Halteplatte besteht darin, den Leadframe 10 zu versteifen und die Teilbereiche 101, 102, 103 des Leadframes nach dem Auftrennen der Solltrennstellen in ihrer Position zu halten. Hierzu hat jeder Teilbereich 101, 102, 103 mindestens eine Öffnung 151, 152, 153, in die Nieten 351, 353 eingreifen (Figur 5). Die Halteplatte 210 hat an den den Öffnungen 151, 152, 153 gegenüberliegenden Stellen ebenfalls Öffnungen 251, 253 (Figur 4), durch welche die Nieten hindurchgreifen. Die Nieten sind Teil einer Stirnplatte 310 eines Steckbuchsengehäuses 300 (Figur 5). Nach plastischer Verformung der aus den Öffnungen der Halteplatte herausragenden Nietenköpfe werden die Stirnplatte 310 des Steckbuchsengehäuses 300, der Leadframe 10 mit allen seinen Teilflächen 101, 102, 103 und die Halteplatte 210 fest miteinander verbunden. An Stellen, an denen auf dem Leadframe optoelektronische oder elektronische Bauelemente montiert und kontaktiert sind, hat die Halteplatte 210 Öffnungen 211 und 212. Eine alternative Methode zur Fixierung der Teilbereiche des Leadframes besteht darin, daß auf der Stirnplatte 310 des Steckbuchsengehäuses zu den Teilbereichen des Leadframes komplementäre Vertiefungen hergestellt werden, in die der Leadframe eingelegt wird. In diesem Fall muß nicht unbedingt jeder isolierte Teilbereich von einer Niete festgehalten werden, sondern er wird in seiner Vertiefung von der darüber liegenden Halteplatte 210 gehalten, die ihrerseits dann nur noch durch wenige Nieten fixiert werden muß.

Anstelle der Nieten lassen sich zur Befestigung des Leadframes beziehungsweise des Steckbuchsengehäuses auch andere Befestigungsmittel wie zum Beispiel Schnappclips mit Hinterschneidungen einsetzen, in denen das zu befestigende Teil mit einer entsprechend gestalteten Öffnung hineingedrückt und so dauerhaft fixiert wird. Die Nieten beziehungsweise die Schnappclips können alternativ auch auf der Halteplatte 210 angebracht sein und durch Öffnungen im Leadframe und in der Stirnplatte hindurchgreifen und auf der Unterseite der Stirnplatte umgenietet werden.

Ebenso ist es möglich, die Halteplatte 210 zwischen dem Leadframe 10 und der Stirnplatte 310 des Steckbuchsengehäuses anzubringen, wobei die Nieten aus der Ober- und Unterseite der Halteplatte hervorstehen und Bestandteil der Halteplatte sind. Der Leadframe 10 und die Stirnplatte 310 haben dann an den den Nieten gegenüberliegenden Stellen Öffnungen zur Aufnahme der Nieten. In diesem Fall müssen die Nietenaufnahmeöffnungen auf dem Leadframe und auf der Stirnplatte des Steckbuchsengehäuses nicht miteinander fluchten, wodurch die Designfreiheit erhöht wird.

Die Halteplatte 210 läßt sich aus Kunststoff ebenfalls im Vielfachnutzen kostengünstig fertigen, wobei gleichzeitig die Befestigungsmittel wie Nieten und Schnappclips hergestellt werden. Die Einzelnutzen sind dabei durch trennbare Brücken miteinander verbunden.

Figur 5 zeigt einen Querschnitt durch das Steckbuchsengehäuse 300, an dessen Stirnplatte 310 über die Nieten 351 und 353 der Leadframe 10 und darüber die Halteplatte 210 mit angenietet sind. Das Steckbuchsengehäuse 300 besteht aus der Stirnplatte 310 mit den Nieten 351 und 353 und je einer Buchsenaufnahme 313, 314 für Steckbuchsen, nämlich für eine Sendebuchse 413 und für eine Empfangsbuchse 414, die als Aufnahmen für jeweils einen nicht dargestellten, optischen Stecker dienen. Die Sendebuchse 413 hat an einer Stirnseite einen Flansch 423, an dessen Frontseite 433 das Sendeelement 13 justiert und fixiert ist. Das Sendeelement 13 hat hierfür auf seiner Lichtaustrittsseite ebenfalls einen Flansch 23 mit einer Flanschfläche 33. Die Justage des Sendebauelementes 13 zur Sendebuchse 413 geschieht zweckmäßigerweise vor dem Einbau in die Buchsenaufnahme 313 in einem Justageautomaten, in dem die Flanschflächen 33 und 433 aktiv zueinander justiert und durch Laserschweißen mit den Schweißpunkten 443 fixiert werden. Die fertig justierte und fixierte Sendeeinheit 3, bestehend aus dem Sendeelement 13 mit seinem Flansch 23 und der Sendebuchse 413 mit ihrem Flansch 423 wird dann mit ihrer Sendebuchse 413 in die Öffnung 323 der Buchsenaufnahme 313 gesteckt und mit ihrem Flansch 423 am Leadframe 10 befestigt. Dieses kann zweckmäßigerweise wieder durch Laserschweißen mit Schweißpunkten 453 geschehen. Auch andere Befestigungsarten wie Kleben, Klemmen oder Löten sind hier möglich. Bei dieser Befestigung ist keine hohe Präzision mehr erforderlich, da die Position der Steckbuchse 413 nur innerhalb des Fangbereiches eines Steckers liegen muß.

Auf der Empfangsseite ist an der Stirnseite der Empfangsbuchse 414 eine lichtdurchlässige Trägerplatte 424 angebracht, auf deren Oberseite 434 die Empfangsdiode 14 justiert und fixiert ist. Diese Trägerplatte kann entsprechend dem Erfordernis der Transmission bei der Empfangslichtwellenlänge aus Glas oder Silizium bestehen. Auch hier kann die Justage und Fixierung der Teile der Empfangseinheit 4 nämlich des Empfangselements 14, der Empfangsbuchse 414 und der Trägerplatte 424 zweckmäßigerweise außerhalb des Moduls in einem Justageautomaten entweder durch aktive Justage mit Verfolgung des Koppelsignals als Regelgröße oder durch passive Justage durch Beobachtung von Justagemarken auf den zueinander zu justierenden Teilen über eine Bildverarbeitung durchgeführt werden. Die fertig justierte und fixierte Empfangseinheit wird dann mit ihrer Empfangsbuchse 414 in die Öffnung 324 der Buchsenaufnahme 314 gesteckt und am Leadframe 10 beispielsweise durch Kleben befestigt.

Das erfindungsgemäße Modul mit Steckeraufnahme läßt sich prinzipiell für alle gebräuchlichen Steckersysteme herstellen. Entsprechend dem jeweiligen Steckersystem sind an den Buchsenaufnahmen 313, 314 Haltevorrichtungen zur lösbaren Befestigung des entsprechenden Steckergehäuses angebracht. In Figur 5 sind hierfür federnde Zungen 301 mit Noppen 302 vorgesehen, die in entsprechende Aussparungen in einem Steckergehäuse (hier nicht gezeigt) einrasten. Ebenso sind andere Befestigungsmittel wie z.B. Schraubgewinde möglich. Der dazugehörige Stecker paßt mit seinem hochpräzisen Steckerstift in die ebenfalls hochpräzise Buchsenöffnung 463 beziehungsweise 464 hinein. Zur optischen Feldanpassung der im Lichtwellenleiter des Steckers geführten Lichtwelle an das optoelektronische Bauelement kann je nach angestrebtem Koppelwirkungsgrad eine Transformationsoptik erforderlich sein. Diese Transformationsoptik kann entweder direkt im Modulgehäuse des elektrooptischen Bauelementes oder in dessen Nähe in der Buchsenöffnung 463 beziehungsweise 464 untergebracht sein (hier nicht gezeichnet) und ist Stand der Technik. Je nach Typ des verwendeten Steckers werden axiale Anschlagmittel eingesetzt.

Eine weiteres vorteilhaftes Ausführungsbeispiel eines Leadframes ist in Figur 6 im Mehrfachnutzen dargestellt. Hier ist neben dem zentralen Teil 810 des Leadframes an beiden Seiten je ein Seitenteil 820 angebracht, das nach dem Trennen der Verbindungsbrücken an einer Biegelinie 821 rechtwinklig nach hinten gebogen werden kann. Solche Biegelinien sind in der Leadframetechnik bekannt und können durch einseitiges Ätzen eines Grabens hergestellt werden, dessen Tiefe etwa der halben Leadframedicke entspricht.

Figur 7 zeigt einen solchen Leadframe mit rechtwinklig umgebogenen Seitenteilen 820, an dessen Mittelteil eine Halteplatte 210 und ein Steckbuchsengehäuse 300 mit einer Sendeeinheit 3' und einer Empfangseinheit 4 angebracht ist. Die Seitenteile 820 und das Mittelteil 810 haben an ihrem Rand Anschlußstifte 722, 711, mit denen sie auf einer Leiterplatte 610 montiert werden können. Durch die abgewinkelte Form erhält der Leadframe eine wesentlich höhere Steifigkeit.

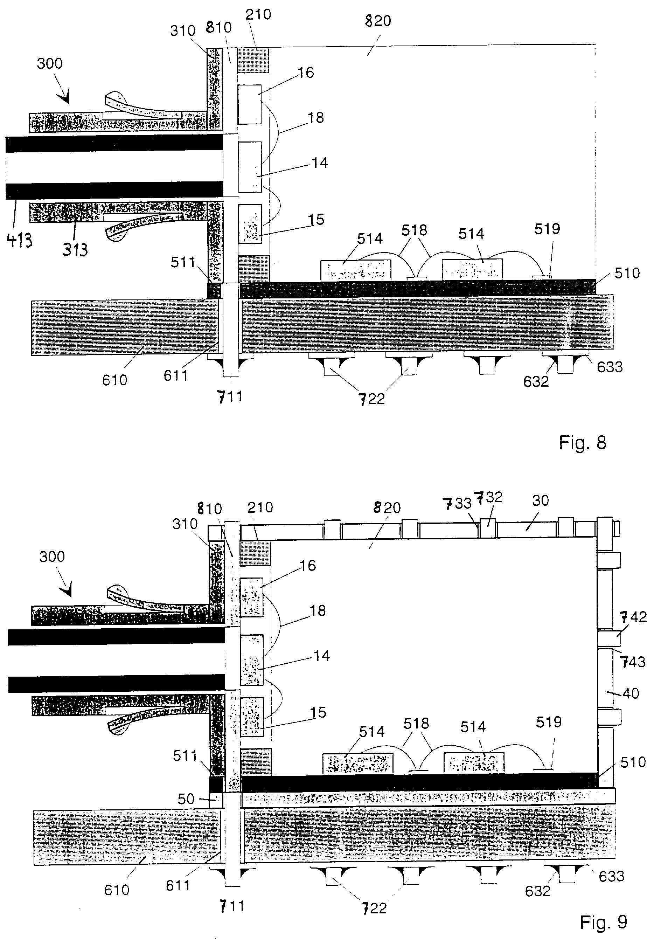

Figur 8 zeigt einen Längsschnitt durch ein fertig montiertes Modul. Auf dessen Unterseite ist eine Grundplatte 510 angebracht, die im Bereich des als Frontplatte dienenden Leadframes 10 und der Seitenteile 820 Löcher 511 aufweist, in welche die Anschlußstifte 711, 722 hindurchgesteckt sind. Die Grundplatte 510 tragt elektronische Bauelemente 514 (zur weiteren Verarbeitung der Empfangssignale beziehungsweise zur Bereitstellung der Sendesignale), die untereinander oder mit Leiterbahnen 519 über Bonddrähte 518 kontaktiert sind. Wird ein Sende- oder Empfangselement im TO-Gehäuse eingesetzt, bei dem die Anschlußbeine nach hinten hinausragen, so ist es vorteilhafter, die elektronischen Bauelemente nur auf der Grundplatte 510 anzubringen und die Anschlußbeine durch Umbiegen zu ihren Kontaktierungspunkten auf der Grundplatte 510 zu führen.

Wenn das Modul fertig bestückt ist, müssen die Bauteile noch gegen Einflüsse von außen geschützt werden. Hierzu kann entweder der gesamte Innenraum des Moduls vergossen oder mit seinen Außenwänden umspritzt werden, oder es werden die noch fehlenden Gehäusewände angebracht. In der Ausführung nach Figur 8 sind bereits metallische Seitenwände und eine metallische Vorderseite vorgesehen.

Figur 9 zeigt ein allseits metallisch umschlossenes Modul. Zum Befestigen der noch fehlenden Gehäusewände 30 auf der Oberseite, auf der Rückseite 40 und auf der Unterseite 50 sind an den Rändern des Leadframes hinausragende Stifte 732, 742 vorgesehen, die durch entsprechende Löcher 733, 743 der Gehäusewände hindurchragen und auf der Außenseite umgebogen werden. Bei allseitiger Verwendung von metallischen Gehäusewänden erhält man so gleichzeitig eine Abschirmung gegen elektromagnetische Strahlung. Alternativ hierzu können auch sämtliche Außenwände in Leadframetechnik zunächst in einer Ebene hergestellt werden, wobei sie alle über Biegelinien aneinander hängen. Durch rechtwinkliges Aufbiegen der Seiten-, Boden-, Rück- und Deckelwände läßt sich so ein allseits geschlossenes Gehäuse aus einem Stück formen, wobei die Wände durch geeignete Stifte und Öffnungen miteinander verzahnt werden. Auch diese weiteren Außenwände können ebenso wie die Grundfläche Träger elektronischer Bauelemente sein, wobei die elektrischen Verbindungen mit der Grundplatte 510 beziehungsweise mit der Leiterplatte 610 entweder über flexible Leiter oder über Stifte 711 beziehungsweise 722 hergestellt werden können.

Das fertige Modul wird mit seinen Anschlußstiften, die unten aus der Grundplatte 510 herausragen, in die Leiterplatte 610 gesteckt, die hierzu Löcher 611 aufweist. Auf der Rückseite der Leiterplatte werden die hindurchragenden Anschlußstifte an die Leiterbahnen 633 über Lötstellen 632 angelötet. Diese Lötstellen dienen gleichzeitig der elektrischen und der mechanischen Kontaktierung des Moduls auf der Leiterplatte. Bedingt durch die geringe Aufbauhöhe und das Fehlen von Faser-Pigtails ist eine automatische Bestückung des erfindungsgemäßen Moduls zusammen mit anderen elektronischen Bauelementen auf der Leiterplatte möglich.

## Patentansprüche

1. Elektrooptisches Modul mit
- einer elektrischen Schnittstelle in Gestalt von Anschlußstiften(111, 112, 113, 711, 722),
- einer Steckeraufnahme für einen optischen Stecker, deren Steckrichtung quer zu den Längsrichtungen der Anschlußstifte verläuft,
- einem elektrooptischen Bauelement (13, 14), das als Wandler dient und optisch mit der Steckeraufnahme gekoppelt ist,
dadurch gekennzeichnet,
- daß ein sich quer zur Steckrichtung der Steckeraufnahme, aber auch in Richtung der jeweiligen Längsausdehnung der Anschlußstifte erstreckender Metallträger (Leadframe) (10) einstückig mit den Anschlußstiften versehen und mechanisch starr mit einer Stirnplatte (310) verbunden ist, die eine Buchsenaufnahme (313, 314) aufweist, deren Längdrichtung sich in der Steckrichtung erstreckt,
- daß in der Buchsenaufnahme eine Buchse (413, 414) als Steckeraufnahme angeordnet ist, die durch den Leadframe (10) starr gehalten ist und das elektrooptische Bauelement (13, 14) justiert trägt und
- daß im Leadframe (10) eine Aussparung (11, 12) für die optische Übertragung zwischen dem elektrooptischen Bauelement (13, 14) und der Steckeraufnahme (413, 414) vorgesehen ist.

2. Elektrooptisches Modul nach Anspruch 1, dadurch gekennzeichnet, daß der Leadframe (10) so abgewinkelt ist, daß sich sein abgewinkelter Teil, der als Seitenteil (820) dient, zwar noch in Richtung der Längsausdehnung der Anschlußstifte erstreckt, aber seine Flächennormale quer zur Steckrichtung der Steckeraufnahme (413, 414) verläuft.

3. Elektrooptisches Modul nach Anspruch 2, dadurch gekennzeichnet, daß das abgewinkelte Seitenteil (820) an seinem Rand Stifte (722) aufweist, mit denen sich das Modul auf einer Leiterplatte (610) montieren läßt.

4. Elektrooptisches Modul nach einem der vorangehenden Ansprüche, dadurch gekennzeichnet, daß der Leadframe (10) durch eine Halteplatte (210) zumindest in einem Teilbereich mechanisch verstärkt und stabilisiert ist.

5. Elektrooptisches Modul nach einem der vorangehenden Ansprüche, dadurch gekennzeichnet, daß es Metallwände (30, 40, 50)zusätzlich zum Leadframe (810, 820) aufweist.

6. Elektrooptisches Modul nach Anspruch 5, dadurch gekennzeichnet, daß daß die Metallwände (30, 40, 50) durch Teile des Leadframes gebildet sind, die zu einer Metallschachtel gefaltet sind.

7. Elektrooptisches Modul nach Anspruch 5 oder 6, dadurch gekennzeichnet, daß daß die Metallwände (30, 40, 50) von Stiften (732, 742) gehalten werden, die sich einstückig am Rand des Leadframes (810, 820) befinden.

8. Elektrooptisches Modul nach einem der vorangehenden Ansprüche, dadurch gekennzeichnet, daß an den Anschlußstiften (111, 112, 113, 711, 722) eine aufgesteckte Leiterplatte (610) angelötet ist.
